# EUROPEAN PATENT SPECIFICATION

(11) **EP 3 597 947 B1**
(45) Date of publication and mention of the grant of the patent: **23.03.2022**
(21) Application number: 18184308.7
(22) Date of filing: 18.07.2018
(51) Int. Cl.: F16C 41/00, F16C 19/52, G01P 3/44, G01P 3/488

(54) **BEARING MONITORING SYSTEM**
LAGERÜBERWACHUNGSSYSTEM
SYSTÈME DE SURVEILLANCE DE PALIER

(43) Date of publication of application: 22.01.2020
(73) Proprietor: NKE Austria GmbH, 4407 Steyr (AT); Fersa Innova SLU, 50197 Zaragoza (ES)
(72) Inventor: Grissenberger, Klaus, 4407 Steyr (AT); Witzler, Thomas, 4407 Steyr (AT); Feizlmair, Guido, 4407 Steyr (AT); Haider, David, 4407 Steyr (AT); Holzer, Matthias, 4407 Steyr (AT); Weidenholzer, Günther, 4152 Sarleinsbach (AT); Kaspar, Kevin, 4020 Linz (AT); Santo Domingo, Sergio, 50197 Zaragoza (ES)
(74) Representative: Schäfer, Matthias W.

(56) References cited:
- EP-A1- 1 571 453
- WO-A1-2009/116445
- DE-A1-102016 204 736
- FR-A1- 3 028 902
- GB-A- 2 535 779
- US-A1- 2004 108 849
- US-A1- 2010 172 605
- US-A1- 2012 020 603
- US-A1- 2012 169 166
- US-A1- 2013 305 827
- US-A1- 2014 010 488
- US-A1- 2018 045 748
- US-B2- 9 453 780
- US-B2- 9 664 234

## Description

This invention concerns a bearing monitoring system, preferably for a roller bearing having a first bearing ring and a second bearing ring being arranged rotatably with respect to each other, with at least one sensor element, at least one transmitter for transmitting a signal and a power supply unit for supplying the sensor element and the transmitter with electrical energy.

Bearing monitoring systems are known from the prior art.

For example, European patent EP 1 292 831 B1 shows a modified bearing with two rows of roller elements in which a sensor is located between the first and second rows. The sensor unit is carried by the inner race and consists of the sensor, a microprocessor, a transmitter and a power supply. The design described here is disadvantageous because additional space is required between the rows for the sensor.

Furthermore, in US 2005/0141795 A1 a bearing assembly is shown in which a magnetic field sensor and a transmitter are located on a bearing seal. The sensor and the transmitter are restricted by the limited installation space of the bearing seal and can therefore only be used with sufficiently large rolling bearings. In addition, installation is complex and expensive. A similar bearing group is described in EP 1 203 960 A2. A flexible sensor element is arranged on the bearing seal.

On the EP 0 594 550 A1, the sensor is located inside the bearing seal of the rolling bearing.

The electric current is generated by a generator located in the bearing. A battery is supplied to supply power when the bearing is not rotating.

US 9 453 789 B2 shows a bearing monitoring system according to the preamble of claim 1.

With all these modules it is not possible to add a sensor system to an existing bearing or a standard bearing. The necessary changes are expensive and technically complex.

The task of the present invention is to eliminate the above-mentioned disadvantages as far as possible and to enable simple and cost-effective assembly, which is also possible retrospectively for almost any type of bearing.

This task is solved by a bearing monitoring system, a bearing monitoring kit and a bearing with the characteristics of independent claims. Advantageous embodiments of the invention are described in the dependent claims.

The present invention makes it easy to retrofit an existing bearing with a bearing monitoring system, as ideally no or only minimal modifications to the existing bearing are required. However, the proposed bearing monitoring system also has advantages for new bearings, as this can avoid a possible weakening of the bearing structure and the installation space of the bearing itself is not or only slightly impaired or the required installation space of the bearing monitoring system is not restricted by the design and/or size of the bearing. As a result, bearing types, such as needle roller bearings, which are usually very difficult to monitor due to their limited installation space, could also be monitored. The bearing monitoring system is also suitable for axial bearings and types of bearings other than roller bearings. It would also be possible to use one and the same bearing monitoring system for temporary monitoring of one bearing and then re-use it for another bearing by means of the inventive bearing monitoring system. I.e., a cost-effective multiple use is possible due to the simple assembly without intervention in the bearing itself. Maintenance, repair or upgrade of the inventive bearing monitoring system is possible without major intervention in the bearing arrangement itself.

A bearing monitoring system, in particular for roller bearings with a first bearing ring and a second bearing ring, which are rotatably arranged relative to each other, has at least one sensor element which comprises one or more sensors for contactless detection of a bearing condition, at least one transmitter for transmitting a signals and a power supply unit for supplying the sensor element and the transmitter with electrical energy, wherein the at least one sensor element is connected to the transmitter and is arranged on a carrier element which is fastened to the bearing via an adapter.

The adapter can be designed as a separate and independent component and arranged between the bearing and the carrier element. For example, the adapter could be stationary, i.e. connected to the stationary bearing ring or the bearing housing, or rotating, i.e. running with the rotating bearing ring. The adapter is used to connect a standardized support element with different sizes and/or types of bearings, whereby the adapter is adapted to the different sizes (e.g. diameters) and dimensions on the bearing side. This is also particularly advantageous for asymmetrical bearing designs, where different connection dimensions must be taken into account depending on the side to which the bearing monitoring system is to be connected. The carrier element and/or the adapter could be designed as a circular ring segment or circular ring. The adapter can be attached to the bearing itself or to the bearing housing, for example, like a flange. The carrier element can be constructed as a flat plate, polygon ring or circular ring in one or more parts. The multi-part design is ideal if, for example, installation obstacles are present or small ducts require the use of a split carrier element. The carrier element can be made of a non-conductive material, in particular fiber-reinforced plastic or similar. The signals detected by the possible multiple sensors, such as a speed sensor, a temperature sensor and a load sensor, which could be sequentially detected via a sampling function, can be forwarded by a transmitter, for example to a receiver located outside and/or remote from the bearing housing. Raw data could, for example, be transmitted as digital signals, whereby the analog-to-digital conversion can either already take place at the sensor itself or afterwards. Both the sensors and the transmitter can be supplied with electrical energy by means of a power supply unit, which can be arranged wholly or partly on the carrier element.

An advantageous further embodiment of the inventive bearing monitoring system provides for at least one sensor to record the bearing temperature, speed, load, vibration, humidity, operating hours, lubricant condition or similar. Different types of non-contact sensors can be used, such as temperature sensors, infrared sensors, optical sensors, piezo sensors, accelerometers, magnetic field sensors, etc.

The adapter is designed as an adapter ring that can be detachably connected to the bearing. The adapter could also be magnetic, for example. In addition, the adapter could be attached to the bearing housing, preferably screwed, by means of an additional concentrically arranged ring, which is connected to the adapter ring via webs or other suitable parts, quasi like a flange. Another embodiment could provide that the adapter has radially inclined projecting arms or holding clamps for engagement in bearing grooves that are already provided on the bearing ring, for example for sealing rings that can be retrofitted. In exceptional cases, additional grooves or notches on the bearing rings may be required to provide support points for the adapter arms.

Another advantageous embodiment of the bearing monitoring system according to the invention provides that the power supply unit, in particular a generator and/or energy storage unit, is arranged on the carrier element and/or the adapter. If designed as a generator, coil elements with coil cores could be provided which are arranged on the carrier element and/or on the adapter and which, for example, work together with a magnetic cage, for example made of pressed steel, to generate a reluctance. A separate reluctance ring could be provided which rotates with the shaft and thus enables energy harvesting ff the bearing does not have a magnetic cage or in addition to such a cage.

The reluctance ring can be made of magnetic material and geometrically designed in such a way that the speed difference between the reluctance ring and the coils generates a variation in magnetic flux, which in turn induces electrical voltage in the opposite coils. In addition to the generator or alternatively, one or more batteries, one or more capacitors or one or more batteries could be provided as an energy storage unit. These could be concentrated or distributed on the support element. A transformer connected to an external power source by cable could also be used as the power supply unit.

Another advantageous embodiment of the inventive bearing monitoring system is that the carrier element is designed as a single piece or as an assembly with the adapter. This allows cost-effective manufacturing processes to be used, for example the carrier element and the adapter ring could be manufactured as one or more plastic parts, whereby the carrier element can be equipped with sensors, power supply unit and transmitter and can have a cover to protect against damage and moisture. The latter can also be achieved, for example, by simply encapsulating the electronic components with a synthetic resin.

Furthermore, a further advantageous embodiment of the inventive bearing monitoring system provides that the carrier element has a signal processing unit and/or a data memory. With this the sensor data can be processed and pre-evaluated and/or log data can be recorded. Furthermore, different monitoring routines could be programmed and called up. Such routines and/or corresponding measured values could for example be stored in a non-volatile or read-only memory. The memory content can be accessed by means of a transmitter, which can also be designed as a transmitter/receiver, for example as a wired or wireless transmitter, in particular as a radio transmitter, especially preferably as a Bluetooth transmitter. A corresponding transmitter and/or receiver could also be designed as a module for remote communication, in particular via a GSM (Global System for Mobile Communications), LTE, G4, G5 or similar. In this way it would be possible to increase the transmission and/or receiving range of the inventive bearing monitoring system. An antenna connected to the transmitter or transmitter/receiver and/or a corresponding signal amplifier could also be provided on the carrier element. This means that a quantity of data can first be collected and stored over a period of time and only read out at a later point in time. This would also allow corresponding program instructions to be stored in the memory. Alternatively, the data could also be transmitted in real time.

Another advantageous further development of the inventive bearing monitoring system provides for a signal amplification unit or relay unit to amplify the wireless signal and/or introduce the wireless signal into a wired bus system, which can be attached in particular to the bearing housing.

Finally, another advantageous embodiment of the inventive bearing monitoring system provides that one or more sensors are additionally arranged on the first or second race.

This could be used to record data such as load data directly on the race, which is otherwise more difficult to record via contactless sensors.

In addition, according to the invention, a bearing monitoring kit is provided for retrofitting to a bearing, the bearing monitoring kit comprising at least the above-mentioned support element and the adapter with sensor element, transmitter and power supply unit. Additional components can be designed and arranged as mentioned above.

In addition, a bearing with a bearing monitoring system as described above is provided for according to the invention. The bearing monitoring system can be pre-assembled on the bearing, whereby additional retaining grooves could also be attached to the bearing itself. In addition, if desired or required for other reasons, additional sensors may be mounted on the bearing itself.

Finally, a system may be provided comprising a bearing and a housing, the bearing being located inside the housing and a transmitter and/or receiver or its antenna on the outside of the housing. The bearing monitoring system may comprise a device for transmitting signals, the housing being penetrated by the device for transmitting signals from an inside to an outside of the housing, the device for transmitting signals preferably being a plug which is held in the housing by friction and/or adhesives and/or a screw thread, in particular a closure screw. In this way, the signals can be transmitted through the device via relay signals and corresponding radio signals can be transmitted to a receiver outside the housing or vice versa. This would allow the distance between transmitter and receiver to be increased without loss of signal quality or electromagnetic housing shielding to be bypassed, which is particularly advantageous for complex machines. This is also advantageous because of the necessity of plugs in general and screw plugs in particular for well-known machines, since they are easy to assemble and very simple to manufacture. In this way it is possible to add such devices to pass signals to any normal machine without major changes. A plug allows penetration into the housing without affecting the tightness of the housing. This improves the quality of the transmitted signal considerably. A stopper or screw cap in its original form is a typical machine emptying device.

In the following, the figures examples useful for understanding the invention and merely exemplary advantageous embodiments. The figures show:
Fig. 1 a schematic exploded view of a first type of bearing with bearing monitoring system according to an example;
Fig. 2 another schematic exploded view of a second type of bearing with bearing monitoring system according to an example;
Fig. 3 a schematic exploded view of a third type of bearing with bearing monitoring system according to the present invention;
Fig. 4 a schematic exploded view of a fourth type of bearing with bearing monitoring system according to the present invention;
Fig. 5 a schematic diagram of an adapter with coils and a cage according an example;
Fig. 6 a schematic exploded view of a fifth type of bearing with bearing monitoring system according to the present invention;
Fig. 7 a schematic view of the carrier element according to the present invention;
Fig. 8 a schematic view of an adapter with a circular segment shaped carrier element according to an example;
Fig. 9 a schematic detail view of an outer ring in section according to an example;
Fig. 10 is a sectional view of a housing with bearing and bearing monitoring system in accordance with an embodiment of the present invention.

In the figures, identical or similar parts are marked with identical reference numerals.

Directions refer to the axial and radial direction of the shown bearing or to the directions in the drawing plane, unless otherwise stated. Individual characteristics of different designs can, as far as technically feasible and possible, be added to or interchanged with the characteristics of the other designs. These variations are hereby explicitly included by the present invention, even if they are not described again in detail.

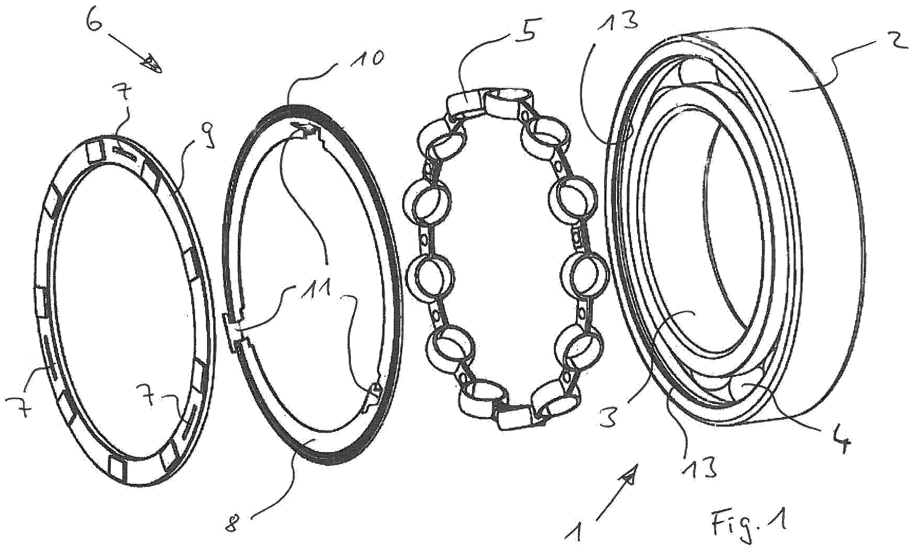

Figure 1 shows a schematic exploded view of a first type of bearing 1 with bearing monitoring system 6 according to an example, wherein the bearing housing and the shaft are not shown. Bearing 1 consists of a first race 2 and a second race 3, in this design the first race 2 is the outer race and the second race 3 is the inner race of bearing 1. Roller elements 4 are arranged between the first race 2 and the second race 3. The roller elements 4 designed as balls are held by a cage 5 made of pressed metal.

An interaction between (not shown) coils arranged on the carrier ring or on the adapter ring and the magnetic cage can serve for the purpose of energy harvesting, i.e. for generating electrical energy. The magnetic cage rotating relative to the coils changes the flux of the coils through the regularly protruding ball mounts and thus generates a magnetic field which is converted into electrical energy by the coils. The amount of electrical energy that can be generated could be further increased by adding a reluctance ring.

An adapter ring 8 is attached to the first race 2. A carrier element 9 in the form of a circular ring is mounted on the adapter ring 8.

For fastening the adapter ring element 8 to the race 2, the adapter ring 8 has clamping devices 10. The clamping device 10 can consist of an annular circular spring edge according to figure 1, which engages in an existing groove on the race 2, which was originally provided for holding seals.

To accommodate the carrier element 9, the adapter ring 8 has terminals 11, which can engage, for example, in slots 7 provided on the carrier ring 9.

Many different types of bearings 1 can be retrofitted with the adapter ring 8 and the carrier element 9.

The carrier element 9 carries a signal processor, a transmitter, a part of the generator system and/or an accumulator as well as a data memory and at least one sensor.

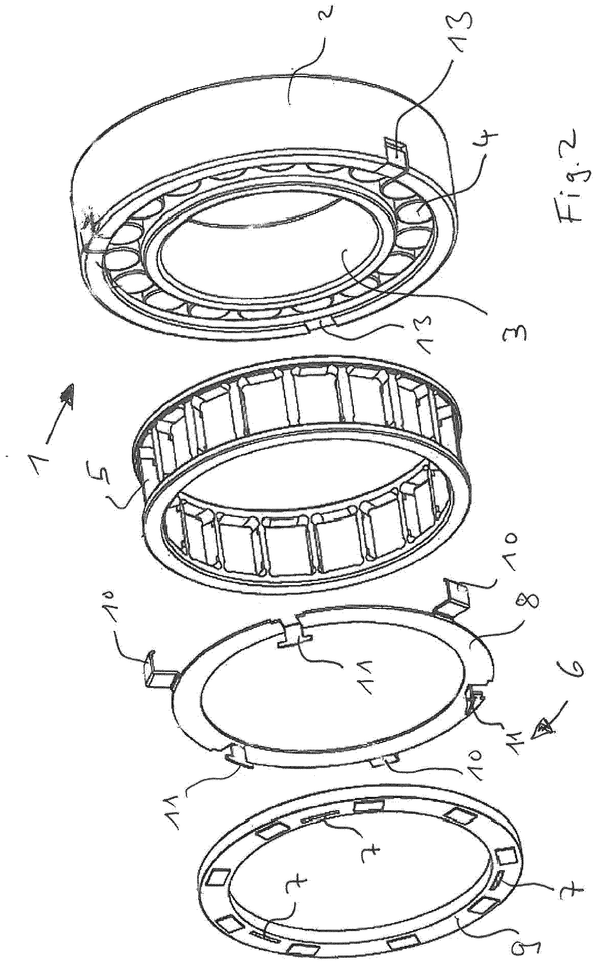

Figure 2 shows another schematic exploded view of a second type of bearing with bearing monitoring system according to an example with cylindrical roller elements 4 held and spaced apart by a non-magnetic cage 5. Within this design, the first race 2 is the outer race.

The clamping device 10 can consist of several terminals 11 as shown in figure 2, which engage in corresponding grooves 13 on the race 2 and are fixed therein.

To accommodate carrier element 9, the adapter ring 8 also has terminals 11 in the design of figure 2, which can engage, for example, in slots 7 provided on carrier ring 9.

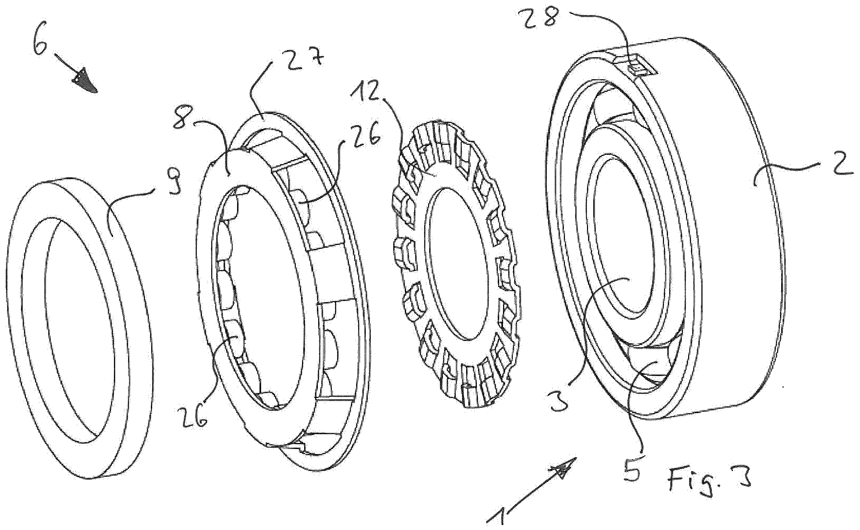

Figure 3 shows a schematic exploded view of a third type of bearing with bearing monitoring system according to this invention. Figure 3 shows a deep groove ball bearing 1 with bearing monitoring system 6, with a carrier element 9 shown from left to right - the electronic elements are not shown - and an adapter ring 8 with coils 26 and concentric mounting ring 27. The shown concentric mounting ring 27 has a larger diameter (in other cases smaller diameter) than the adapter ring 8 and is connected to the adapter ring 8 via webs and is clamped and fixed on the outer ring, i.e. on the first race 2, between the end face of the outer ring and the surrounding components, such as the housing shoulder, a retaining ring, etc.

In addition, a reluctance ring 12 can be provided, which is in this case not absolutely necessary, since here the sheet steel cage 5 of the balls is already sufficient to generate electrical energy in conjunction with the coils 26. The shown reluctance ring 12 can increase the energy yield. The reluctance ring 12 is fixed to the second race 3 via its inner ring, for example by clamping the reluctance ring 12 between the second race 3 and a surrounding component, e.g. a circlip.

Most physical bearing properties, such as speed, temperature, vibrations, lubricant condition, etc., can already be detected by sensors on the carrier element 9. Optionally, a sensor 28 can also be arranged on the first race 2. This optional sensor 28 could, for example, be a strain gauge for load measurement.

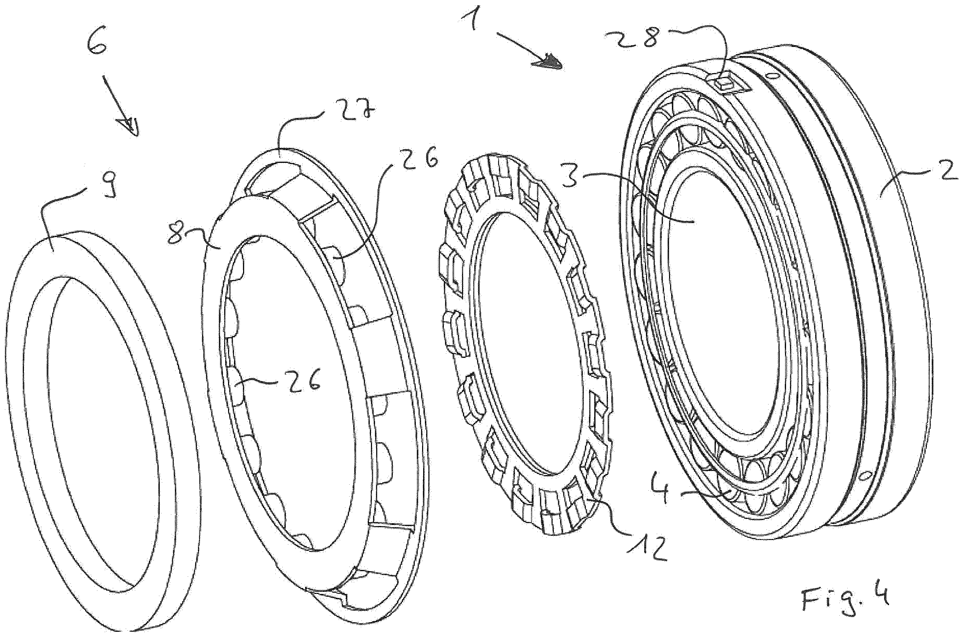

Figure 4 shows a schematic exploded view of a fourth type of bearing 1, here a spherical roller bearing, with bearing monitoring system 6 according to the present invention, whereby the bearing housing and the shaft are not shown.

From left to right a purely schematically shown carrier element 9 - the electronics thereon are not shown - and an adapter ring 8 with coils 26 and concentric mounting ring 27 are shown.

The concentric mounting ring 27 has a larger diameter than the adapter ring 8 and is connected to the adapter ring 8 via webs, creating the shape of a truncated cone. This is clamped on the first race 2, between the end face of the outer ring and a suitable surrounding component and thus fixed.

Furthermore, a reluctance ring 12 is provided, which is fixed to the second race 3 via the inner ring of the reluctance ring. For example, the reluctance ring 12 is clamped between the second race 3 and a circlip.

Most physical bearing properties can already be measured by contactless sensors mounted on the support element 9. Optionally, a sensor 28 can also be arranged on the first race 2.

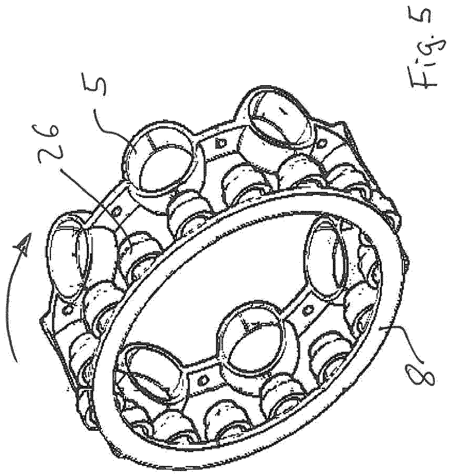

Figure 5 shows a schematic diagram of an adapter 8 with coils 26 and a cage 5 according to an example.

The interaction of the coils 26 with the magnetic sheet steel cage for energy generation is shown in principle. A gap is provided between the coils 26 and the cage 5, for example in the order of approx. 1 mm, which changes regularly due to the relative movement of the magnetic cage 5 rotating in the direction of the arrow relative to the stationary adapter 8, for example. This closes the magnetic circuit and induces electrical voltage in the coils 26. In this example, the number of coils 26 is twice as large as the number of balls and cage pockets in the cage.

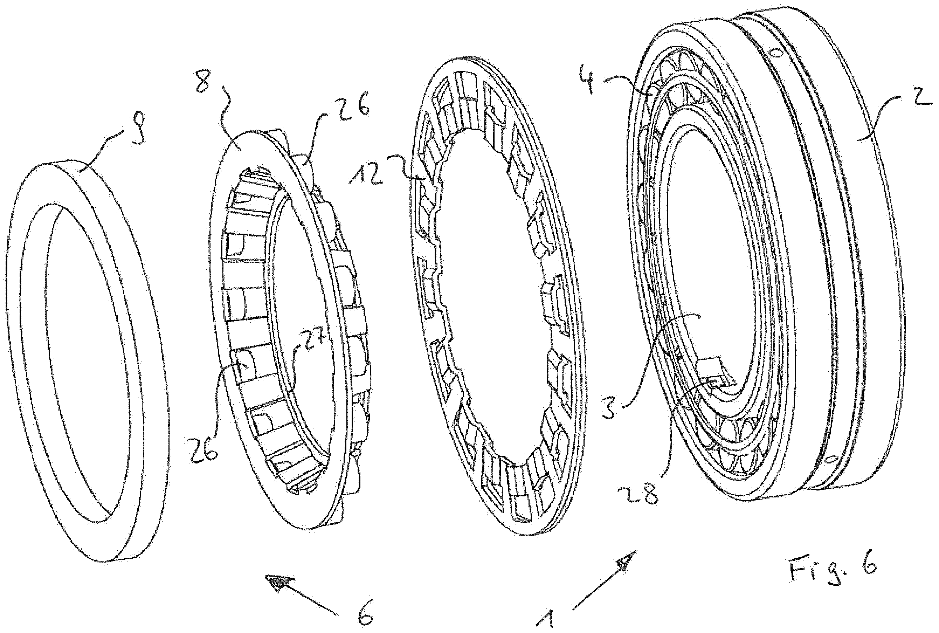

Figure 6 shows a schematic exploded view of a fourth type of bearing 1, here a spherical roller bearing, with bearing monitoring system 6 according to the present invention, whereby the bearing housing and the shaft are not shown.

From left to right a purely schematically shown carrier element 9 - the electronics thereon are not shown - and an adapter ring 8 with coils 26 and concentric 2. mounting ring 27 are shown.

The concentric mounting ring 27 has a smaller diameter than the adapter ring 8 and is connected to the adapter ring 8 via webs and is clamped on the inner ring, i.e. on the second race 3, between the end face of the inner ring and the surrounding components, such as a circlip, etc., and thus fixed to the bearing.

Furthermore, a reluctance ring 12 can be provided to generate electrical energy in conjunction with the coils 26. The reluctance ring 12 is fixed with its outer edge to the first race 2 via, for example by clamping the reluctance ring 12 between the first race 2 and a surrounding component, e.g. a circlip.

Most physical bearing quantities, such as speed, temperature, vibrations, lubricant condition, etc., can already be detected by contactless sensors on the carrier element 9. Optionally, a sensor 28 can also be arranged on the second race 3. This optional sensor 28 could, for example, be a strain gauge for load measurement.

Generally, measurements are possible on the bearing ring which is connected to the sensors via the adapter ring and carrier ring. If measurements are to be made on both the inner ring and the outer ring of a bearing, appropriate bearing monitoring systems should be used on both the outer ring and the inner ring. The two bearing monitoring systems, such as the bearing monitoring system in Figure 4 and the bearing monitoring system in Figure 6, could then be located on opposite bearing sides, i.e. the bearing monitoring system for the outer ring on the left side and the bearing monitoring system for the inner ring on the right side of the bearing.

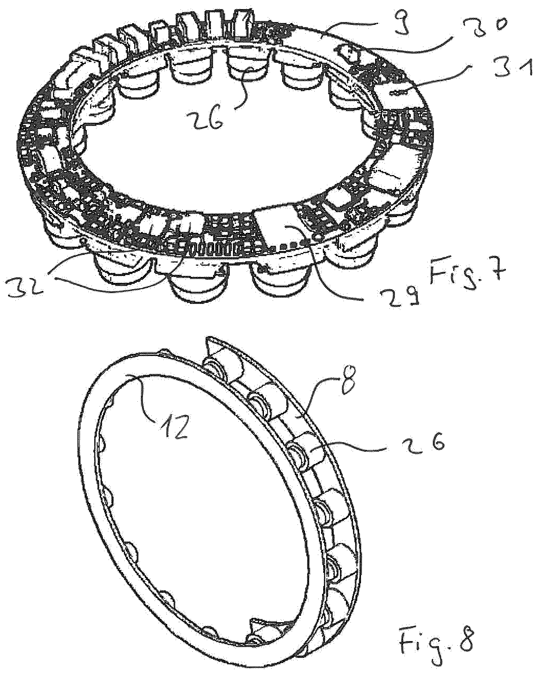

Figure 7 shows a schematic view of carrier element 9 according to this invention. The carrier element 9 carries a signal processor 29, a transmitter 30, a part of the generator system, namely the coils 26 with coil core, as well as a data memory 31 and contactless sensors 32. Carrier element 9 is usually provided or encapsulated with a - not shown - cover to protect the electronics and the sensors against dirt and moisture.

Figure 8 shows a schematic view of a circular segment shaped adapter ring 8 with carrier element 9 according to an example. The coils 26 can be arranged between adapter 8 and a reluctance ring 12. The coils are attached to adapter 8 with their respective cores and electrically connected to the carrier element. This design of the carrier element 9 can be used, for example, with limited installation space or very large diameters.

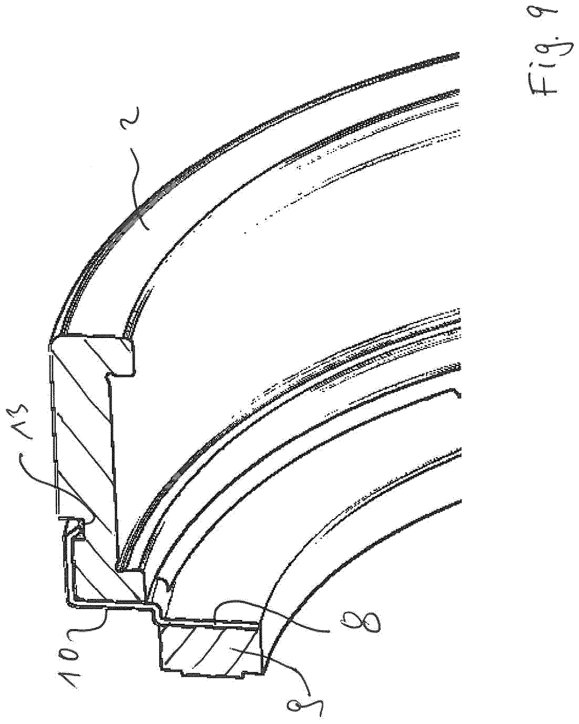

Figure 9 shows a schematic detail view of an outer ring in section according to an example.

The diagram shows the anchorage of the carrier element 9 via the adapter 8 and the clamping device 10 arranged thereon in grooves 13 arranged on the outer ring 2.

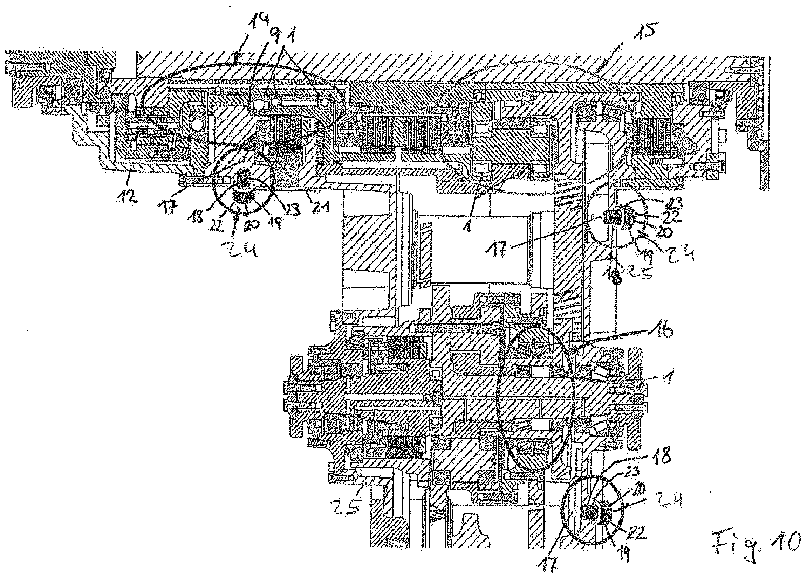

Figure 10 shows a sectional drawing of a housing 25 with bearing and bearing monitoring system according to a design of the present invention. Thereby several bearings 1 are provided for a shaft respectively, each of which with a bearing monitoring system. The system can be part of any machine type. A first group 14, a second group 15 and a third group 16 of bearings 1 are marked. The relay signal devices are mounted near groups 14, 15, 16 of bearings 1 to transmit signals from an inside of the housing 25 to an outside of the housing 25. Near the first group 14 of bearing 1 there is a connector 24, which is a device for transmitting signals or relay signal devices. In addition, a corresponding connector 24 is located near the second group 15 and a connector 24 near the third group 16. The connectors 24 extend from the inside of the housing 25 to the outside of the housing 25.

The connectors 24 each consist of a first section 17, which is arranged inside the housing 25. The first section 17 contains means for receiving the signals from bearing 1; a second section 18 of connector 24 is designed as a fixing section and can have a thread; alternative fixing in the housing can be achieved by pressing or gluing. A third section 19 of the signal forwarding device comprises a transmitter for transmitting the signal to a receiver outside the housing 25. An amplifier part 20 of connector 24 consists of an amplifier. The device for forwarding signals is connected to a power source via wire 21. To receive signals from outside, each connector 24 consists of a fourth section 22 with a second receiver. The unit has a fifth section 16, which is designed as a transmitter for transmitting signals into the inside of the housing 25. In addition, the device has an additional section 23, which is designed as a module for remote communication.

Sensors within the bearing monitoring system measure signals and transmit them to the devices when the bearing monitoring system is operating. These devices receive the signal from inside the housing 25, amplify it and send it to the receiver outside the housing 25.

### reference numerals

- 1: bearing
- 2: first race
- 3: second race
- 4: roller elements
- 5: cage
- 6: bearing monitoring system
- 7: slot
- 8: adapter ring
- 9: carrier element
- 10: clamping device
- 11: terminal
- 12: reluctance ring
- 13: groove
- 14: first group
- 15: second group
- 16: third group
- 17: first section
- 18: second section
- 19: third section
- 20: amplifier part
- 21: wire
- 22: fourth section
- 23: additional section
- 24: connector
- 25: housing
- 26: coil
- 27: concentric ring
- 28: optional sensor
- 29: signal processor
- 30: transmitter
- 31: data memory

## Claims

1. Bearing monitoring system (6), preferably for a roller bearing (1) having a first bearing ring(2) and a second bearing ring (3) being arranged rotatably with respect to each other, comprising at least one sensor element which has one or more sensors (32) for contactless detection of a bearing condition, at least one transmitter (30) for transmitting a signal and a power supply unit for supplying the sensor element and the transmitter with electrical energy, wherein the at least one sensor element is connected to the transmitter (30),
wherein
the at least one sensor element is arranged on a carrier element (9) which is fastened to the bearing via an adapter which is formed as an adapter ring (8, 27) detachably connectable to the bearing (1),
**characterized in that** the adapter (8, 27) has a concentric mounting ring (27) with a larger or smaller diameter than the adapter ring (8) and is connected to the adapter ring (8) via webs, the mounting ring (27) being fixedly clampable on the first bearing ring (2, 3).

2. The bearing monitoring system (6) according to claim 1, wherein at least one sensor (32) is provided for detecting the bearing temperature, speed, load, vibration, humidity, operating hours, lubricant condition or the like.

3. The bearing monitoring system (6) according to claim 1 or 2 , wherein the adapter (8, 27) has essentially the shape of a truncated cone.

4. The bearing monitoring system (6) according to any of claims 1 to 3, wherein the adapter (8, 27) is designed as a separate and independent component arranged between the bearing (1) and the carrier element (9).

5. The bearing monitoring system (6) according to any of claims 1 to 4, wherein the power supply unit, preferably a generator and/or energy storage device, is arranged on the carrier element (9) and/or the adapter (8, 27).

6. The bearing monitoring system (6) according to any of claims 1 to 5, wherein coil elements (26) are arranged on the adapter (8, 27) and/or carrier element (9) and optionally a reluctance ring (12) for generating electrical energy is arranged on the bearing (1).

7. The bearing monitoring system (6) according to any of claims 1 to 6, wherein an energy storage unit, preferably one or more accumulators, one or more capacitors or one or more batteries, is provided on the adapter (8, 27) and/or carrier element (9).

8. The bearing monitoring system (6) according to any one of claims 1 to 7, wherein the carrier element (9) is formed as a circular ring segment, a polygon ring or circular ring, and the adapter (8, 27) is formed as a circular ring segment or circular ring.

9. The bearing monitoring system (6) according to any of claims 1 to 8, the adapter (8, 27) being magnetic.

10. The bearing monitoring system (6) according to any of claims 1 to 9, the carrier element (9) being integral with or formed as an assembly with the adapter (8, 27).

11. The bearing monitoring system (6) according to any of claims 1 to 10, the adapter (8) having holding clamps (10) for engagement in bearing grooves (13) or a second concentric ring (27) for attachment to a bearing ring (2, 3) or bearing housing (25).

12. The bearing monitoring system (6) according to any of claims 1 to 11, wherein the transmitter (30) is designed as a wireless transmitter, preferably as a radio transmitter, particularly preferably as a Bluetooth transmitter.

13. The bearing monitoring system (6) according to any of claims 1 to 12, the carrier element (9) comprising a signal processing unit and/or a data memory.

14. The bearing monitoring system (6) according to any of claims 1 to 13, wherein a signal amplification unit or relay unit is further provided for amplifying the wireless signal and/or introducing the wireless signal into a wired bus system, which can be attached in particular to the bearing housing (25).

15. The bearing monitoring system (6) according to any of claims 1 to 14 , having one or more sensors (32) additionally arranged on the first race (2) or second race (3).

16. A bearing monitoring kit for retrofitting to a bearing (1), the kit comprising the bearing monitoring system (6) according to any one of claims 1 to 15.

17. A bearing (1) having a bearing monitoring system (6) according to any one of claims 1 to 15.

18. A system comprising a housing (25) and a bearing (1) with a bearing monitoring system (6) according to any one of claims 1 to 15,
the bearing (1) being located within the housing (25) and a transmitter (30) and/or receiver or its antenna being located on the outside of the housing.

19. The system as claimed in claim 18, wherein the bearing monitoring system (6) is arranged in the system and configured to jointly monitor a plurality of bearings (1).

## Patentansprüche

1. Lagerüberwachungssystem (6), vorzugsweise für ein Wälzlager (1) mit einem ersten Lagerring (2) und einem zweiten Lagerring (3), welche in Bezug zueinander drehbar angeordnet sind, welches mindestens ein Sensorelement, welches einen oder mehrere Sensoren (32) zur berührungslosen Erfassung eines Lagerzustands aufweist, mindestens einen Signalgeber (30) zum Übertragen eines Signals und eine Stromversorgungseinheit zum Versorgen des Sensorelements und des Signalgebers mit elektrischer Energie aufweist, wobei das mindestens eine Sensorelement mit dem Signalgeber (30) verbunden ist,
wobei das mindestens eine Sensorelement an einem Trägerelement (9) angeordnet ist, welches an dem Lager über einen Adapter befestigt ist, welcher als ein mit dem Lager (1) lösbar verbindbarer Adapterring (8, 27) ausgebildet ist,
**dadurch gekennzeichnet, dass** der Adapter (8, 27) einen konzentrischen Montagering (27) mit einem größeren oder kleineren Durchmesser als der Adapterring (8) aufweist und über Stege mit dem Adapterring (8) verbunden ist, wobei der Montagering (27) an den ersten Lagerring (2, 3) feststehend klemmbar ist.

2. Lagerüberwachungssystem (6) nach Anspruch 1, wobei mindestens ein Sensor (32) zum Erfassen von Lagertemperatur, -drehzahl, -belastung, -vibration, -feuchtigkeit, - betriebsstunden, -schmierstoffzustand oder dergleichen vorgesehen ist.

3. Lagerüberwachungssystem (6) nach Anspruch 1 oder 2, wobei der Adapter (8, 27) im Wesentlichen die Form eines Kegelstumpfes aufweist.

4. Lagerüberwachungssystem (6) nach einem der Ansprüche 1 bis 3, wobei der Adapter (8, 27) als separates und unabhängiges Bauteil ausgebildet ist, welches zwischen dem Lager (1) und dem Trägerelement (9) angeordnet ist.

5. Lagerüberwachungssystem (6) nach einem der Ansprüche 1 bis 4, wobei die Stromversorgungseinheit, vorzugsweise ein Generator und/oder eine Energiespeichervorrichtung, an dem Trägerelement (9) und/oder dem Adapter (8, 27) angeordnet ist.

6. Lagerüberwachungssystem (6) nach einem der Ansprüche 1 bis 5, wobei Spulenelemente (26) an dem Adapter (8, 27) und/oder Trägerelement (9) angeordnet sind und optional ein Reluktanzring (12) zum Erzeugen elektrischer Energie an dem Lager (1) angeordnet ist.

7. Lagerüberwachungssystem (6) nach einem der Ansprüche 1 bis 6, wobei eine Energiespeichereinheit, vorzugsweise ein oder mehrere Akkumulatoren, ein oder mehrere Kondensatoren oder eine oder mehrere Batterien, an dem Adapter (8, 27) und/oder Trägerelement (9) vorgesehen ist.

8. Lagerüberwachungssystem (6) nach einem der Ansprüche 1 bis 7, wobei das Trägerelement (9) als ein kreisförmiges Ringsegment, ein Polygonring oder kreisförmiger Ring ausgebildet ist und der Adapter (8, 27) als ein kreisförmiges Ringsegment oder kreisförmiger Ring ausgebildet ist.

9. Lagerüberwachungssystem (6) nach einem der Ansprüche 1 bis 8, wobei der Adapter (8, 27) magnetisch ist.

10. Lagerüberwachungssystem (6) nach einem der Ansprüche 1 bis 9, wobei das Trägerelement (9) mit dem Adapter (8, 27) integriert oder als Baugruppe mit dem Adapter (8, 27) ausgebildet ist.

11. Lagerüberwachungssystem (6) nach einem der Ansprüche 1 bis 10, wobei der Adapter (8) Halteklammern (10) zum Eingriff in Lagernuten (13) oder einen zweiten konzentrischen Ring (27) zur Befestigung an einem Lagerring (2, 3) oder Lagergehäuse (25) aufweist.

12. Lagerüberwachungssystem (6) nach einem der Ansprüche 1 bis 11, wobei der Sender (30) als ein drahtloser Signalgeber, vorzugsweise als Funksignalgeber, besonders bevorzugt als Bluetooth-Signalgeber, ausgebildet ist.

13. Lagerüberwachungssystem (6) nach einem der Ansprüche 1 bis 12, wobei das Trägerelement (9) eine Signalverarbeitungseinheit und/oder einen Datenspeicher aufweist.

14. Lagerüberwachungssystem (6) nach einem der Ansprüche 1 bis 13, wobei ferner eine Signalverstärkungseinheit oder Relaiseinheit zum Verstärken des drahtlosen Signals und/oder zum Einbringen des drahtlosen Signals in ein drahtgebundenes Bussystem vorgesehen ist, welches insbesondere an dem Lagergehäuse (25) angebracht sein kann.

15. Lagerüberwachungssystem (6) nach einem der Ansprüche 1 bis 14, welches einen oder mehrere Sensoren (32) aufweist, welche zusätzlich an dem ersten Laufring (2) oder dem zweiten Laufring (3) angeordnet sind.

16. Lagerüberwachungsbausatz zum Nachrüsten an einem Lager (1), wobei der Bausatz das Lagerüberwachungssystem (6) nach einem der Ansprüche 1 bis 15 aufweist.

17. Lager (1), welches ein Lagerüberwachungssystem (6) nach einem der Ansprüche 1 bis 15 aufweist.

18. System, welches ein Gehäuse (25) und ein Lager (1) mit einem Lagerüberwachungssystem (6) nach einem der Ansprüche 1 bis 15 aufweist, wobei sich das Lager (1) innerhalb des Gehäuses (25) befindet und ein Signalgeber (30) und/oder Empfänger oder dessen Antenne sich an der Außenseite des Gehäuses befinden.

19. System nach Anspruch 18, wobei das Lagerüberwachungssystem (6) in dem System angeordnet und dafür ausgelegt ist, um eine Vielzahl von Lagern (1) gemeinsam zu überwachen.

## Revendications

1. Un système de surveillance de roulement (6), de préférence pour un roulement à rouleaux (1) présentant une première bague de roulement (2) et une seconde bague de roulement (3) disposées de manière rotative l'une par rapport à l'autre, comprenant au moins un élément de capteur qui présente un ou plusieurs capteurs (32) pour la détection sans contact d'un état du roulement, au minimum un transmetteur (30) conçu pour transmettre un signal et une unité d'alimentation électrique conçue pour alimenter l'élément de capteur et le transmetteur avec de l'énergie électrique, étant précisé qu'au moins un élément de capteur est connecté au transmetteur (30),
étant précisé que l'au moins un élément de capteur est disposé sur un élément porteur (9) qui est fixé au roulement via un adaptateur qui est formé comme anneau adaptateur (8, 27) connectable de manière amovible au roulement (1),
**caractérisé en ce que** l'adaptateur (8, 27) présente un anneau de montage concentrique (27) avec un diamètre plus grand ou plus petit que l'anneau adaptateur (8) et qu'il est connecté à l'anneau adaptateur (8) via des toiles, l'anneau adaptateur (27) pouvant être bloqué de manière fixe sur la première bague de roulement (2,3).

2. Le système de surveillance de roulement (6) conformément à la Revendication 1, étant précisé qu'au moins un capteur (32) est prévu pour détecter la température, la vitesse, la charge, les vibrations, l'humidité, les heures de fonctionnement, l'état de lubrification ou similaire du roulement.

3. Le système de surveillance de roulement (6) conformément à la Revendication 1 ou 2, étant précisé que l'adaptateur (8, 27) présente essentiellement la forme d'un cône tronqué.

4. Le système de surveillance de roulement (6) conformément à l'une quelconque des Revendications 1 à 3, étant précisé que l'adaptateur (8, 27) est conçu comme un composant séparé et indépendant disposé entre le roulement (1) et l'élément porteur (9).

5. Le système de surveillance de roulement (6) conformément à l'une quelconque des Revendications 1 à 4, étant précisé que l'unité d'alimentation, de préférence un générateur et/ou un dispositif de stockage d'énergie, est disposé sur l'élément porteur (9) et/ou l'adaptateur (8, 27).

6. Le système de surveillance de roulement (6) conformément à l'une quelconque des Revendications 1 à 5, étant précisé que des éléments de bobinage (26) sont disposés sur l'adaptateur (8, 27) et/ou l'élément porteur (9) et, facultativement, un anneau de réluctance (12) conçu pour générer de l'énergie électrique est disposé sur le roulement (1).

7. Le système de surveillance de roulement (6) conformément à l'une quelconque des Revendications 1 à 6, étant précisé qu'une unité de stockage d'énergie, de préférence un ou plusieurs accumulateurs, un ou plusieurs condensateurs ou une ou plusieurs batteries, est prévue sur l'adaptateur (8, 27) et/ou élément porteur (9).

8. Le système de surveillance de roulement (6) conformément à l'une quelconque des Revendications 1 à 7, étant précisé que l'élément porteur (9) formé comme segment annulaire circulaire, anneau polygonal ou anneau circulaire, et l'adaptateur (8, 27) est formé comme segment annulaire circulaire ou anneau circulaire.

9. Le système de surveillance de roulement (6) conformément à l'une quelconque des Revendications 1 à 8, l'adaptateur (8, 27) étant magnétique.

10. Le système de surveillance de roulement (6) conformément à l'une quelconque des Revendications 1 à 9, l'élément porteur (9) étant intégré à ou formé comme assemblage avec l'adaptateur (8, 27).

11. Le système de surveillance de roulement (6) conformément à l'une quelconque des Revendications 1 à 10, l'adaptateur (8) présentant des brides de maintien (10) conçus pour s'engager dans des rainures de roulement (13) ou un second anneau concentrique (27) conçu pour être attaché à un anneau de roulement (2, 3) ou un boîtier de roulement (25).

12. Le système de surveillance de roulement (6) conformément à l'une quelconque des Revendications 1 à 11, étant précisé que le transmetteur (30) est conçu comme transmetteur sans fil, de préférence comme transmetteur radio, de manière particulièrement préférée comme transmetteur Bluetooth.

13. Le système de surveillance de roulement (6) conformément à l'une quelconque des Revendications 1 à 12, l'élément porteur (9) comprenant une unité de traitement de signal et/ou une mémoire de données.

14. Le système de surveillance de roulement (6) conformément à l'une quelconque des Revendications 1 à 13, étant précisé qu'une unité d'amplification de signal ou une unité de relais est en outre prévue pour amplifier le signal sans fil et/ou introduire le signal sans fil dans un système de bus filaire, qui peut être fixé, en particulier, au boîtier de roulement (25).

15. Le système de surveillance de roulement (6) conformément à l'une quelconque des Revendications 1 à 14, disposant d'un ou plusieurs capteurs (32) disposés de manière additionnelle sur le premier tour (2) ou le second tour (3).

16. Un kit de surveillance de roulement pour installation sur un roulement (1), le kit comprenant le système de surveillance de roulement (6) conformément à l'une quelconque des Revendications 1 à 15.

17. Un roulement (1) disposant d'un système de surveillance de roulement (6) conformément à l'une quelconque des Revendications 1 à 15.

18. Un système comprenant un boîtier (25) et un roulement (1) avec un système de surveillance de roulement (6) conformément à l'une quelconque des Revendications 1 à 15,
le roulement (1) étant situé dans le boîtier (25) et un transmetteur (30) et/ou un récepteur ou son antenne étant situé sur l'extérieur du boîtier.

19. Le système comme revendiqué à la Revendication 18, étant précisé que le système de surveillance de roulement (6) est disposé dans le système et configuré pour surveiller conjointement une pluralité de roulements (1).
